# EUROPÄISCHE PATENTANMELDUNG

(11) **EP 4 851 520 A1**
(43) Veröffentlichungstag der Anmeldung: **09.12.2026**
(21) Anmeldenummer: 25180528.9
(22) Anmeldetag: 03.06.2025
(51) Int. Cl.: F16M 11/06, F16M 11/20, F16M 13/02

(54) **GELENKVORRICHTUNG UND HALTEEINRICHTUNG**

(71) Anmelder: Tobii Dynavox AB, 115 50 Stockholm (SE)
(72) Erfinder: Döringshoff, Dominik, 34260 Kaufungen (DE)
(74) Vertreter: Hannke Bittner & Partner mbB Regensburg

(57) **Zusammenfassung**

Die Erfindung betrifft ein Gelenkvorrichtung zur Halterung zweier Profilelemente umfassend zwei Halteelemente für jeweils ein Profilelement, wobei mittels der Gelenkvorrichtung ein Öffnungswinkel zwischen den beiden Profilelementen einstellbar und arretierbar ist, wobei die Gelenkvorrichtung 1 eine Rasteinrichtung 6 umfasst, welche eine Einrastposition 7 aufweist, wobei in der Einrastposition 7 eine lösbare Einrastung erfolgt, bei welcher ein wahrnehmbares Signal erzeugt wird, wobei die Einrastposition 7 modifizierbar ist und mit einem vorbestimmten Öffnungswinkel zwischen den beiden Profilelementen 2, 3 korreliert.

## Beschreibung

Die Erfindung betrifft eine Gelenkvorrichtung zur Halterung zweier Profilelemente, umfassend zwei Halteelemente für jeweils ein Profilelement, wobei mittels der Gelenkvorrichtung ein Öffnungswinkel zwischen den beiden Profilelementen einstellbar und arretierbar ist. Die Erfindung umfasst weiterhin eine Halteeinrichtung umfassend eine Gelenkvorrichtung.

Derartige Halteeinrichtungen finden häufig im Pflegebereich Anwendung. Die Halteeinrichtung kann an einer Pflegeeinrichtung angeordnet werden. Derartige Pflegeeinrichtungen können beispielsweise ein Rollstuhl, ein Bett, ein Beistelltisch oder Ähnliches sein. Die Halteeinrichtung ist dafür vorgesehen ein Objekt zu halten. Solche Objekte können eine Kommunikationseinrichtung, beispielsweise ein Tablet oder ein Smartphone, eine Betätigungseinrichtung, beispielsweise eine Einrichtung zur Detektion der Augenbewegung oder Ähnliches sein. Die Halteeinrichtung ist dazu ausgebildet, das entsprechende Objekt in einer für den Nutzer angemessenen und komfortablen Position anzuordnen und in dieser Position zu halten.

Die Halteeinrichtung umfasst somit zumindest zwei Profilelemente und zumindest eine Gelenkvorrichtung, mittels welcher eine rotatorische Bewegung der Profilelemente zueinander und eine Arretierung der Profilelemente in einer Position, in welcher ein Öffnungswinkel zwischen den Profilelementen aufgespannt ist ermöglicht ist. Die Halteeinrichtung kann somit derart eingestellt werden, dass das Objekt sich in der gewünschten Position befindet.

Oftmals ist es notwendig, dass die Halteeinrichtung zusammengeklappt werden muss, beispielsweise für einen Transport. Bei einem anschließenden weiteren Gebrauch muss dann wieder eine neue zeitaufwendige Einstellung des Öffnungswinkels erfolgen.

Aufgabe der vorliegenden Erfindung ist es eine Gelenkvorrichtung und eine Halteeinrichtung bereitzustellen, welche die genannten Probleme lösen.

Diese Aufgabe wird durch den Gegenstand des vorliegenden Patentansprüche 1 und 12 gelöst.

Erfindungsgemäß wird eine Gelenkvorrichtung zur Halterung zweier Profilelemente bereitgestellt, wobei die Gelenkvorrichtung zwei Halteelemente für jeweils ein Profilelement umfasst, wobei mittels der Gelenkvorrichtung ein Öffnungswinkel zwischen den beiden Profilelementen einstellbar und arretierbar ist, wobei die Gelenkvorrichtung eine Rasteinrichtung umfasst, welche eine Einrastposition aufweist, wobei in der Einrastposition eine lösbare Einrastung erfolgt, bei welcher ein wahrnehmbares Signal erzeugt wird, wobei die Einrastposition modifizierbar ist und mit einem vorbestimmten Öffnungswinkel zwischen den beiden Profilelementen korreliert.

Vorteilhafterweise wird durch die Gelenkvorrichtung eine rotatorische Bewegung der Profilelemente zueinander ermöglicht. Durch eine solche rotatorische Bewegung wird der Öffnungswinkel, welcher sich zwischen den beiden Profilelemente aufspannt, verändert. Vorteilhafterweise ermöglicht die Gelenkvorrichtung ebenso eine Arretierung der beiden Profilelemente relativ zueinander, bei einem bestimmten Öffnungswinkel.

Vorteilhafterweise ist das wahrnehmbare Signal bei der Einrastung ein haptisches Signal und/oder ein akustisches Signal. Beispielsweise kann dieses Signal ein Klicken sein, welches hörbar und/oder haptisch wahrnehmbar ist. Die Einrastung soll auch leicht wieder lösbar sein. Die Einrastung zusammen mit dem Signal soll dem Nutzer das Erreichen des vorbestimmten Öffnungswinkels kenntlich machen. Eine weitere Arretierung der Profilelemente bei einem vorbestimmten Öffnungswinkel soll anderweitig durch die Gelenkvorrichtung erfolgen. Eine Kraftbeaufschlagung der Profilelemente beispielsweise ein Zusammenklappen löst die Einrastung.

Werden die Profilelemente beispielsweise nach einem Transport aus einem zusammengeklappten Zustand, in welchem der Öffnungswinkel beispielsweise ca. 0° aufweist, rotatorisch auseinander bewegt erfolgt eine Einrastung und die Erzeugung des Signals bei dem vorbestimmten Öffnungswinkel. Die Einrastposition korreliert mit einem vorbestimmten Öffnungswinkel, d.h. eine Einrastposition kann einem Öffnungswinkel zugeordnet werden. Der Nutzer kann so immer wieder den gleichen vorbestimmten Öffnungswinkel auf einfache Art und Weise reproduzieren.

Eine Halteeinrichtung zur Halterung eines Objekts umfassend zumindest eine Gelenkvorrichtung kann somit schnell und auf einfache Art und Weise reproduzierbar auf die optimale Position eingestellt werden.

Nach einer bevorzugten Ausführungsform umfassen die Halteelemente einen Aufnahmeabschnitt, in welchem ein Profilelement angeordnet ist. Vorzugsweise ist der Aufnahmeabschnitt an zwei einander gegenüberliegenden Hauptabschnitten angeordnet. Vorteilhafterweise sind in einem Grundzustand die gegenüberliegenden Hauptabschnitte entlang einer Höhenachse (Z) beabstandet. Es befindet sich somit in dem Grundzustand ein Spalt zwischen den beiden gegenüberliegenden Hauptabschnitten. In einem solchen Grundzustand sind die Profilelemente in den Aufnahmeabschnitt einführbar oder herausführbar.

Vorzugsweise sind die Halteelemente von dem Grundzustand in einen Arretierungszustand überführbar. Vorzugsweise sind in dem Arretierungszustand die gegenüberliegenden Hauptabschnitte zumindest teilweise zusammengeführt, wodurch das Profilelement in dem Aufnahmeabschnitt arretiert ist. Durch die Zusammenführung wird die Beabstandung beziehungsweise der Spalt geringer. Die gegenüberliegenden Hauptabschnitte können sich auch zumindest teilweise berühren. Vorteilhafterweise erfolgt die Zusammenführung durch zumindest ein Befestigungsmittel. Die gegenüberliegenden Hauptabschnitte sind somit vorteilhafterweise durch zumindest ein Befestigungsmittel zusammenführbar.

Das zumindest eine Befestigungsmittel ist vorteilhafterweise eine Zylinderschraube. Die Zylinderschraube ist in einer Durchführung eines Hauptabschnitts durchgeführt und liegt auf einem Abstützabschnitt dieses Hauptabschnitts an. Weiterhin greift ein Außengewinde der Zylinderschraube in ein Innengewinde einer Durchführung in dem weiteren Hauptabschnitt. Durch Anziehen der Zylinderschraube erfolgt somit die Zusammenführung der beiden Hauptabschnitte.

Vorteilhafterweise umfasst der Aufnahmeabschnitt einen bogenartigen Abschnitt, welcher zumindest teilweise einen Aufnahmebereich, in welchen das Profilelement angeordnet ist, umschließt. Der bogenartige Abschnitt weist vorzugsweise eine Elastizität auf, so dass durch die Zusammenführung der beiden Hauptabschnitte der bogenartige Abschnitt elastisch verformt wird. Durch diese Verformung wird das Profilelement eingeklemmt.

Nach einer weiteren bevorzugten Ausführungsform weist der Aufnahmebereich eine Querschnittsfläche auf, welche im Wesentlichen ähnlich zu einer Querschnittsfläche des Profilelements ist. Vorzugsweise ist weisen die Profilelemente eine kreisförmige oder ellipsenförmige Querschnittsfläche auf. Vorzugsweise weist der Aufnahmebereich eine kreisförmige oder ellipsenförmige Querschnittsfläche auf.

Nach einer weiteren bevorzugten Ausführungsform sind die Halteelemente entlang der Höhenachse (Z) übereinander angeordnet. Vorzugsweise sind die Halteelemente relativ zueinander drehbar. Durch diese bevorzugte Drehung der Halteelemente ist der Öffnungswinkel einstellbar. Eine Drehung der Halteelemente relativ zueinander bedeutet demnach eine Änderung des Öffnungswinkels zwischen den Profilelementen.

Nach einer weiteren bevorzugten Ausführungsform umfassen die Halteelemente Kontaktabschnitte. Vorzugsweise sind die Kontaktabschnitte ringförmig ausgebildet. Bevorzugt liegt ein erster Kontaktabschnitt des ersten Halteelements an einem zweiten Kontaktabschnitt des zweiten Halteelements an. Vorzugsweise bestehen der Kontaktabschnitt und die Hauptabschnitte eines Haltelements aus dem gleichen Material. Denkbar wäre jedoch auch, dass der Kontaktabschnitt und die Hauptabschnitte eines Haltelements aus unterschiedlichen Materialien bestehen. Denkbar wäre, dass das Material des Kontaktabschnitts ein besonders reibfestes Material ist. Denkbar wäre auch, dass das Material des Kontaktabschnitts einen geringen Reibwiderstand bereitstellt.

Nach einer weiteren bevorzugten Ausführungsform umfasst die Gelenkvorrichtung ein Arretierungsmittel, mittels welchem eine Drehposition der Halteelemente relativ zueinander und somit der Öffnungswinkel zwischen den beiden Profilelementen arretierbar ist. Vorzugsweise ist das Arretierungsmittel als Klemmhebelelement ausgebildet. Bevorzugt weisen die Halteelemente aneinander anliegende Durchführungen auf, in welchen das Arretierungsmittel zumindest abschnittsweise angeordnet ist. Vorteilhafterweise sind die Durchführungen im Wesentlichen mittig in den Hauptabschnitten der Halteelemente angeordnet. Das Arretierungsmittel umfasst vorzugsweise einen stiftartigen Abschnitt, welcher auf einem Abstützabschnitt des zweiten Haltelements aufliegt. Der stiftartige Abschnitt erstreckt sich vorzugsweise durch eine Durchführung in dem zweiten Haltelement. Weiterhin erstreckt sich der stiftartige Abschnitt zumindest teilweise in eine Durchführung des ersten Haltelements. Die Durchführung in dem zweiten Haltelement umfasst vorzugsweise ein Innengewinde, in welches ein an dem stiftartigen Abschnitt vorgesehenes Außengewinde eingreift. Somit werden durch ein vorteilhaftes Anziehen der Gewindeverbindung die beiden Halteelemente aneinandergepresst, wodurch der eingestellte Öffnungswinkel arretiert wird.

Nach einer weiteren bevorzugten Ausführungsform umfasst die Rasteinrichtung einen Stellring. Vorzugsweise weist der Stellring eine Führungsnut und eine Ausnehmung auf. Die Führungsnut ist vorteilhafterweise kreisbogenartig auf einer Oberfläche des Stellrings angeordnet. Vorzugsweise ist die Ausnehmung entlang der Länge des Kreisbogens mittig in dem Kreisbogen angeordnet. Vorteilhafterweise ist eine Tiefe der Ausnehmung größer ist als eine Tiefe der Führungsnut.

Nach einer weiteren bevorzugten Ausführungsform umfasst die Rasteinrichtung ein Rastelement. Vorteilhafterweise ist das Rastelement mit einer Vorspannkraft derart beaufschlagt, dass dieses gegen den Stellring gedrückt ist. Bei der Bewegung der Profilelemente beziehungsweise bei einer Änderung des Öffnungswinkels befindet sich das Rastelement somit auf dem Stellring und/oder in der Führungsnut. Ein Übergang von einer Stellringoberfläche in die Führungsnut kann ebenso durch eine haptisches und/oder akustische Signal von einem Nutzer wahrgenommen werden. Wird der Öffnungswinkel erreicht, rastet das Rastelement in die Ausnehmung ein. Durch dieses Einrasten wird ein wahrnehmbares Signal beispielsweise ein haptisches und/oder ein akustisches Signal erzeugt. Somit weiß der Benutzer, dass der vorbestimmtet Öffnungswinkel erreicht ist. Das Rastelement befindet sich somit in der Ausnehmung, wenn der vorbestimmte Öffnungswinkel zwischen den beiden Profilelementen vorliegt.

Nach einer weiteren bevorzugten Ausführungsform ist ein Federelement und/oder ein elastisches Element vorgesehen, welches die Vorspannkraft bereitstellt. Durch die Vorspannkraft wird das Rastelement gegen den Stellring gedrückt. Das Federelement kann beispielsweise eine Schraubenfeder eine Torsionsfeder oder Ähnliches sein. Das elastische Element kann beispielsweise aus einem elastischen Polymer bestehen. Vorzugsweise ist Federelement und/oder ein elastisches Element in dem Rastelement integriert.

Nach einer weiteren bevorzugten Ausführungsform umfasst, die Gelenkvorrichtung einen Klemmring, mittels welchem der Stellring bezüglich einer Rotation relativ zu den Halteelementen arretierbar ist.

Nach einer weiteren bevorzugten Ausführungsform ist der Stellring an einem ersten Halteelement angeordnet. Vorzugsweise umschließt der Klemmring den Stellring radial. Vorzugsweise ist zumindest ein Befestigungsmittel vorgesehen, um den Klemmring an dem ersten Halteelement zu befestigen. Vorzugsweise umschließt der Kontaktabschnitt des ersten Halteelements den Klemmring radial. Vorteilhafterweise umfasst der Klemmring einen radial nach innen ragenden Vorsprung, welcher teilweise auf dem Stellring aufliegt. Das zumindest eine Befestigungsmittel ist vorzugsweise als eine Zylinderschraube ausgebildet, deren Gewinde in ein Innengewinde einer Bohrung in dem Klemmring eingreift. Ein Anziehen dieser Gewindeverbindung führt dazu, dass der Vorsprung des Klemmrings gegen den Stellring und das Haltelement gepresst wird, wodurch eine Drehung des Stellrings nicht mehr möglich ist: Der Stellring ist somit arretiert.

Nach einer weiteren bevorzugten Ausführungsform ist das Rastelement an einem zweiten Halteelement angeordnet. Vorzugsweise ist das Rastelement in einer Ausnehmung oder Durchführung eines Hauptabschnitts des zweiten Halteelements angeordnet. Vorzugsweise das Rastelement in der Ausnehmung außermittig angeordnet. Bei einer Drehung des zweiten Halteelements relativ zu dem ersten Haltelement bewegt sich somit Rastelement auf einer Kreisbahn, welche dem Stellring entspricht. Das Rastelement bewegt sich also vorteilhafterweise bei einer Drehung des zweiten Halteelements relativ zu dem ersten Haltelement auf dem Stellring.

Die Aufgabe wird weiterhin durch eine Halteeinrichtung zur Halterung eines Objekts umfassend eine Gelenkvorrichtung nach einer der oben beschriebenen Ausführungsformen gelöst. Die Halteeinrichtung kann dabei mit allen bereits obig im Rahmen der Gelenkvorrichtung beschriebenen Merkmalen einzeln oder in Kombination miteinander ausgestattet sein und umgekehrt.

Nach einer besonders bevorzugten Ausführungsform ist die Halteeinrichtung dazu bestimmt und eingerichtet ist an einer Pflegeeinrichtung angeordnet zu werden. Die Pflegeeinrichtung kann beispielsweise ein Rollstuhl, ein Bett, ein Beistelltisch oder Ähnliches sein. Das Objekt kann eine Kommunikationseinrichtung, beispielsweise ein Smartphone oder ein Tablet, eine Anzeigeeinrichtung oder eine Bedienungseinrichtung, beispielsweise eine Einrichtung zur Detektion der Augenbewegung sein.

Die Halteeinrichtung ist vorzugsweise dazu ausgebildet, das entsprechende Objekt in einer für den Nutzer angemessenen und komfortablen Position anzuordnen und in dieser Position zu halten.

Die Halteeinrichtung umfasst zumindest zwei Profilelemente und zumindest eine Gelenkvorrichtung. Denkbar wäre auch, dass die Halteeinrichtung mehrere Gelenkvorrichtungen und entsprechen mehrere Profilelemente umfasst.

Die Halteeinrichtung umfasst zumindest zwei Profilelemente und zumindest eine Gelenkvorrichtung, mittels welcher eine rotatorische Bewegung der Profilelemente zueinander und eine Arretierung der Profilelemente in einer Position, in welcher ein Öffnungswinkel zwischen den Profilelementen sich erstreckt ermöglicht ist. Mittels der zumindest einen Gelenkvorrichtung können die Profilelemente derart eingestellt werden, dass das Objekt sich in der gewünschten Position befindet. Der vorbestimmte Öffnungswinkel und somit die vorbestimmte Stellung der Halteeinrichtung kann durch die erfindungsgemäße Gelenkvorrichtung sehr zeiteffizient und einfach wieder, beispielsweise nach einem Transport in die gewünschte optimale Position für den Nutzer gebracht werden.

Weitere Vorteile, Ziele und Eigenschaften der vorliegenden Erfindung werden anhand nach-folgender Beschreibung der anliegenden Figuren erläutert. Gleichartige Komponenten können in den verschiedenen Ausführungsformen gleiche Bezugszeichen aufweisen.

In den Figuren zeigen:
- Fig.1: eine Gelenkvorrichtung nach einer Ausführungsform;
- Fig.2: eine Gelenkvorrichtung nach einer Ausführungsform;
- Fig.3: ein erstes Halteelement nach einer Ausführungsform;
- Fig.4: ein erstes Halteelement nach einer Ausführungsform;
- Fig.5: ein zweites Halteelement nach einer Ausführungsform;
- Fig.6: eine Schnittansicht der Gelenkvorrichtung nach einer Ausführungsform;
- Fig.7: eine Schnittansicht der Gelenkvorrichtung nach einer Ausführungsform;
- Fig.8: eine Schnittansicht der Gelenkvorrichtung nach einer Ausführungsform;
- Fig.9: eine Vorderansicht einer Halteeinrichtung (100) zur Halterung eines Objekts nach einer Ausführungsform;
- Fig.10: eine Rückansicht einer Halteeinrichtung (100) zur Halterung eines Objekts nach einer Ausführungsform.

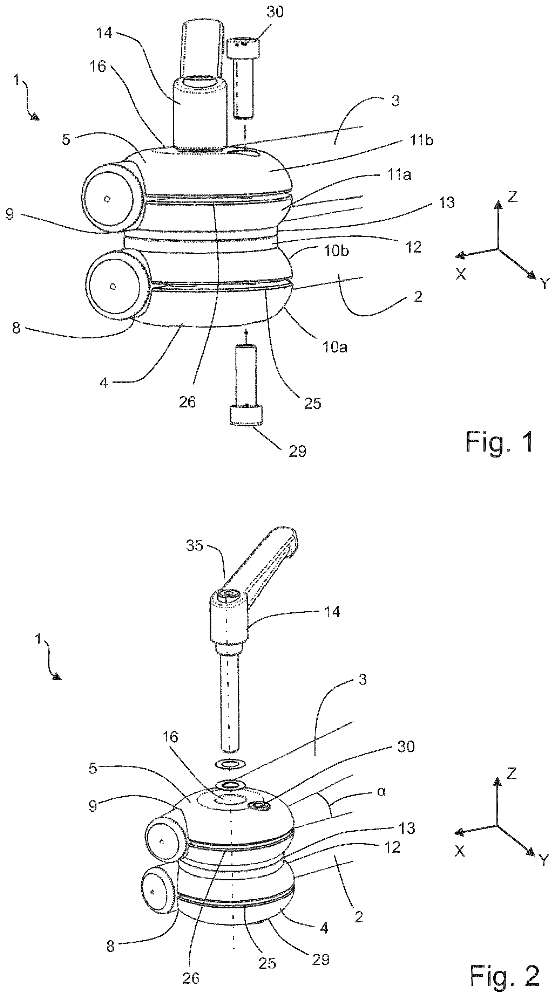

In den Figuren 1 bis 8 ist eine Gelenkvorrichtung 1 zur Halterung zweier Profilelemente 2, 3 umfassend zwei Halteelemente 4, 5 für jeweils ein Profilelement 2, 3 dargestellt, wobei mittels der Gelenkvorrichtung 1 ein Öffnungswinkel α zwischen den beiden Profilelementen 2, 3 einstellbar und arretierbar ist, wobei die Gelenkvorrichtung 1 eine Rasteinrichtung 6 umfasst, welche eine Einrastposition 7 aufweist, wobei in der Einrastposition 7 eine lösbare Einrastung erfolgt, bei welcher ein wahrnehmbares Signal erzeugt wird, wobei die Einrastposition 7 modifizierbar ist und mit einem vorbestimmten Öffnungswinkel α zwischen den beiden Profilelementen 2, 3 korreliert.

Die Gelenkvorrichtung 1 erstreckt sich entlang einer Höhenachse Z einer Längsachse X und einer Breitenachse Y.

Wie in den Figuren 1 und 2 ersichtlich, sind die Halteelemente 4, 5 entlang der Höhenachse Z übereinander angeordnet. Dabei sind die Halteelemente 4, 5 relativ zueinander drehbar. Durch diese Drehung der Halteelemente 4, 5 ist der Öffnungswinkel α zwischen den Profilelementen 2, 3 einstellbar. In den Figuren 1 und 2 ist das zweite Halteelement 5 auf dem ersten Halteelement 4 angeordnet. Die beiden Halteelemente 4, 5 sind somit entlang der Höhenachse Z gestapelt.

Die Halteelemente 4, 5 sind im Wesentlichen donutförmig und weisen jeweils zwei einander gegenüberliegende Hauptabschnitte 10a, 10b, 11a, 11b auf. Die jeweiligen gegenüberliegenden Hauptabschnitte 10a, 10b, 11a, 11b sind in einem Grundzustand entlang der Höhenachse Z beabstandet. Ein unterer Hauptabschnitt 10a, 11a ist in einem Grundzustand somit über einen Spalt 25, 26 von einem oberen Hauptabschnitt 10b, 11b beabstandet.

Der untere Hauptabschnitt 10a, 11a und der obere Hauptabschnitt 10b, 11b sind durch einen bogenartigen Abschnitt 27 miteinander verbunden. Der bogenartige Abschnitt 27, 28 ein Abschnitt des unteren Hauptabschnitts 10a, 11a und ein Abschnitt des oberen Hauptabschnitts 10b, 11b bilden einen Aufnahmeabschnitt 8, 9, in welchen ein Profilelement 2, 3 angeordnet ist. Der bogenartige Abschnitt 27, 28 weist eine gewisse Elastizität auf, sodass der untere Hauptabschnitt 10a, 11a und der obere Hauptabschnitt 10b, 11b unter Kraftbeaufschlagung zusammenführbar sind. Durch ein entsprechendes Zusammenführen des unteren Hauptabschnitts 10a, 11a und des oberen Hauptabschnitt 10b, 11b und die einhergehende elastische Verformung des bogenartigen Abschnitts 27, 28 wird das Profilelement 2, 3 verklemmt beziehungsweise arretiert. D. h. die inneren Oberflächen innerhalb des Aufnahmeabschnitts 8, 9 werden gegen das Profilelement 2, 3 gepresst.

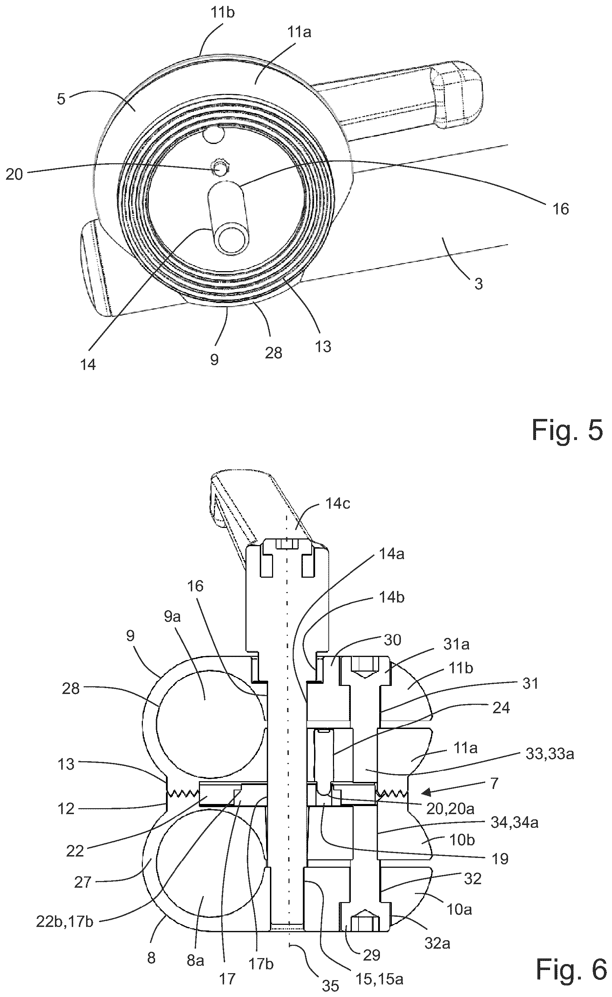

Das Zusammenführen der Hauptabschnitte 10a, 10b, 11a, 11b beziehungsweise das Halten der Zusammenführung der Hauptabschnitte 10a, 10b, 11a, 11b wird durch ein Befestigungsmittel 29, 30 erreicht. Dies ist beispielsweise in den Schnittzeichnungen der Figuren 6, 7 und 8 dargestellt. Hierzu ist in dem oberen Hauptabschnitt 10b, 11b eine erste Durchführung 31, 32 beziehungsweise eine Bohrung vorgesehen, in welcher das Befestigungsmittel 29, 30 in Form einer Zylinderschraube angeordnet ist. Die erste Durchführung 31, 32 beziehungsweise Bohrung umfasst einen Senkabschnitt 31a, 32a, d. h. einen Abschnitt mit einem größeren Durchmesser als der Durchmesser der verbleibenden Durchführung. In dem Senkabschnitt 31a ist der Kopf der Zylinderschraube angeordnet. Der Kopf der Zylinderschraube liegt somit an einem Abstützabschnitt des oberen Hauptabschnitts 10b, 11b (der Übergang zwischen Senkabschnitt 31a und restlicher Durchführung).

Das Befestigungsmittel 29, 30 in Form einer Zylinderschraube erstreckt sich weiterhin durch den Spalt 25, 26 in eine zweite Durchführung 33, 34 des unteren Hauptabschnitts 10a, 11a. In dieser zweiten Durchführung 33, 34 des unteren Hauptabschnitts 10a, 11a ist ein Innengewinde 33a, 34a vorgesehen, in welches ein Gewinde der Zylinderschraube eingreift. Die zweite Durchführung 33, 34 des unteren Hauptabschnitts 10a, 11a fluchtet mit der ersten Durchführung 31, 32 des oberen Hauptabschnitts 10b, 11b. Durch Anziehen der Zylinderschraube werden somit die Hauptabschnitte 10a, 10b, 11a, 11b zusammengeführt.

Die Halteelemente 4, 5 umfassen eine Mittelachse 35, welche sich im Wesentlichen mittig durch die Halteelemente 4, 5 erstreckt. Der Aufnahmeabschnitt 8, 9 ist seitlich von der Mittelachse 35 angeordnet. Der bogenartige Abschnitt 27, 28 stellt einen äußeren Rand der Halteelemente 4, 5 dar. Die erste und zweite Durchführung 31, 32, 33, 34 sind in einem seitlichen Bereich der Hauptabschnitte 10a, 10b, 11a, 11b vorgesehen. Die erste und zweite Durchführung 31, 32, 33, 34 sind somit außermittig angeordnet. Die Mittelachse 35 ist zwischen den ersten und zweiten Durchführung 31, 32, 33, 34 und dem Aufnahmeabschnitt 8, 9.

Der Aufnahmeabschnitt 8, 9 umschließt zumindest teilweise einen Aufnahmebereich 8a, 9a. Der Aufnahmebereich 8a, 9a weist vorzugsweise eine Querschnittsfläche auf, welche im Wesentlichen ähnlich zu einer Querschnittsfläche des Profilelements 2, 3 ist. Vorzugsweise weisen die Profilelemente 2, 3 eine kreisförmige oder ellipsenförmige Querschnittsfläche auf. Vorzugsweise weist der Aufnahmebereich 8a, 9a eine kreisförmige oder ellipsenförmige Querschnittsfläche auf.

Die Gelenkvorrichtung 1 umfasst ein Arretierungsmittel 14, mittels welchem eine Drehposition der Halteelemente 4, 5 relativ zueinander und somit der Öffnungswinkel α zwischen den beiden Profilelementen 2, 3 arretierbar ist. Das Arretierungsmittel 14 ist vorzugsweise als Klemmhebelelement ausgebildet. Die Halteelemente 4, 5 weisen aneinander anliegende Durchführungen 15, 16 auf, in welchen das Arretierungsmittel 14 zumindest abschnittsweise angeordnet ist.

Die vierte Durchführung 16, beziehungsweise Bohrung, erstreckt sich durch das obere zweite Halteelement 5, beziehungsweise durch den oberen Hauptabschnitt 11b und den unteren Hauptabschnitt 11a des zweiten Halteelements 5. Die vierte Durchführung 16 umfasst einen Senkabschnitt 16a, d. h. einen Abschnitt mit einem größeren Durchmesser als der Durchmesser der verbleibenden Durchführung.

Die dritte Durchführung 15, beziehungsweise Bohrung, erstreckt sich durch das untere erste Halteelement 4, beziehungsweise durch den oberen Hauptabschnitt 10b und den unteren Hauptabschnitt 10a des ersten Halteelements 4. Die dritte Durchführung 15 fluchtet mit der vierten Durchführung 16. Die dritte Durchführung 15 und die vierte Durchführung 16 sind mittig in den Halteelementen 4, 5 angeordnet. Die Mittelachse 35 verläuft somit auch mittig durch die dritte Durchführung 15 und die vierte Durchführung 16.

Das Arretierungsmittel 14 umfasst einen stiftartigen Abschnitt 14a, welcher in einer oberen Bereich 14b einen vergrößerten Durchmesser aufweist (analog zu einem Kopf einer Zylinderschraube). Dieser obere Bereich 14b ist mit einem Hebelelement 14c, welches zur Betätigung durch einen Nutzer vorgesehen ist, verbunden. Der stiftartige Abschnitt 14a erstreckt sich gänzlich durch das obere zweite Halteelement 5 und zumindest teilweise in das untere erste Halteelement 4. Der obere Bereich 14b ist in dem Senkabschnitt 16a der vierten Durchführung 16 angeordnet. Der obere Bereich 14b liegt somit an einem Abstützabschnitt (der Übergang zwischen Senkabschnitt 16a und restlicher Durchführung) an.

Der stiftartige Abschnitt 14a erstreckt sich gänzlich durch die vierte Durchführung 16 also durch das obere zweite Halteelement 5 und weiterhin zumindest teilweise in die dritte Durchführung 15. Innerhalb der dritten Durchführung 15 erstreckt sich der stiftartige Abschnitt 14a durch den oberen Hauptabschnitt 10b des ersten Halteelements 4 und zumindest teilweise in den unteren Hauptabschnitt 10a des ersten Halteelements 4. In einem unteren Bereich 15a der dritten Durchführung 15 ist ein Innengewinde vorgesehen. Ein Außengewinde an dem stiftartigen Abschnitt 14a greift in dieses Innengewinde ein. Durch eine Drehbewegung des Arretierungsmittels 14 werden somit das erste Halteelement 4 und das zweite Halteelement 5 aneinandergepresst. Hierdurch wird eine Position der Halteelemente 4, 5 relativ zueinander beziehungsweise der Öffnungswinkel α zwischen den beiden Profilelementen 2, 3 arretiert. Eine weitere Drehung der Halteelemente 4, 5 wird unterbunden.

Die Rasteinrichtung 6 umfasst einen Stellring 17. Dieser Stellring 17 weist eine Führungsnut 18 und eine Ausnehmung 19 auf. Die Führungsnut 18 ist kreisbogenartig auf einer oberen Oberfläche 17a des Stellrings 17 angeordnet. Dabei ist die Ausnehmung 19 entlang der Länge des Kreisbogens mittig in dem Kreisbogen angeordnet. Eine Tiefe der Ausnehmung 19 entlang der Höhenachse Z ist größer ist als eine Tiefe der Führungsnut 18 entlang der Höhenachse Z.

Der Stellring 17 liegt mittig auf dem unteren ersten Halteelement 4 beziehungsweise auf einer äußeren Oberfläche 4a unteren ersten Halteelement 4. Der Stellring 17 ist somit mittig bezüglich der Mittelachse 35. Weiterhin ist der Stellring 17 entlang der Höhenachse Z zwischen dem ersten Halteelement 4 und dem zweiten Halteelement 5 angeordnet. Der Stellring 17 umfasst eine mittige Öffnung 17b, durch welche der stiftartige Abschnitt 14a des Arretierungsmittels 14 sich erstreckt.

Vorliegend weist der Stellring 17 eine Führungsnut 18 auf, welche kreisbogenartig ausgestaltet ist. Es wäre jedoch auch denkbar, dass eine Führungsnut sich entlang eines geschlossenen Umfangs erstreckt. Der Stellring 17 umfasst eine umlaufende Stufe 17c, welche radial außerhalb der Führungsnut 18 angeordnet ist und zumindest teilweise an der Führungsnut 18 anliegt. Die Stufe 17c führt von der oberen Oberfläche 17a zu einer entlang der Höhenachse Z tieferen Oberfläche eines umlaufenden Vorsprungs.

Die Gelenkvorrichtung 1 umfasst einen Klemmring 22, mittels welchem der Stellring 17 bezüglich einer Rotation relativ zu den Halteelementen 4, 5 arretierbar ist.

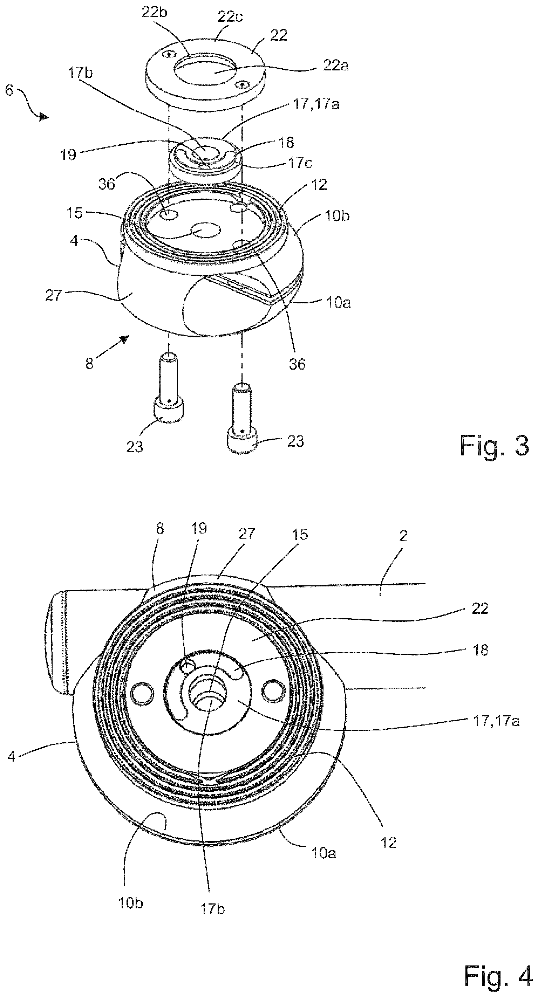

Der Klemmring 22 weist einen eine Öffnung 22a auf, in welche ein nach innen ragender umlaufender Vorsprung 22b angeordnet ist. Dieser Vorsprung 22b liegt auf der Stufe 17c des Stellrings 17 auf. Der umlaufende Vorsprung 22b und die Stufe 17c sind komplementär ausgebildet. Eine obere Oberfläche 22c des Klemmrings 22 ist somit bündig mit der oberen Oberfläche 17a des Stellrings 17. Der Klemmring 22 ist umschließt den Stellring 17 radial und ist somit auch mittig bezüglich der Mittelachse 35. In Figur 4 ist beispielsweise ersichtlich das die Führungsnut 18 des Stellrings 17 innerhalb der Öffnung 22a des Klemmrings 22 angeordnet ist.

Eine Höhe entlang der Höhenachse Z von einem unteren Rand des Klemmrings 22 bis zu dem innen umlaufenden Vorsprung 22b des Klemmrings 22 entspricht einer Höhe entlang der Höhenachse Z von einem unteren Rand des Stellrings bis zu der Stufe 17c des Stellrings 17. Eine Gesamthöhe des Klemmrings 22 entlang der Höhenachse Z entspricht im Wesentlichen eine Gesamthöhe des Stellrings 17 entlang der Höhenachse Z. Wird der Klemmring 22 somit gegen das erste Halterungselement 4 beziehungsweise die äußere Oberfläche 4a des ersten Halterungselements 4 gepresst presst der der Klemmring 22 auch den Stellrings 14 entsprechend gegen das Halteelement 4 beziehungsweise die äußere Oberfläche 4a des erste Halterungselement 4. Der Stellring 17 kann in einer solchen Stellung nicht mehr gedreht werden. Wird der Klemmring 22 gelockert kann der Stellring 17 um die Mittelachse 35 gedreht werden. Durch diese Drehung kann die Einrastposition 7 modifiziert werden, welche mit dem vorbestimmten Öffnungswinkel α korreliert.

Es ist zumindest ein Befestigungsmittel 23 vorgesehen, um den Klemmring 22 an dem ersten Halteelement 4 zu befestigen. Vorliegend sind zwei Befestigungsmittel 23 in Form von Zylinderschrauben vorgesehen. Die Zylinderschrauben sind durch zwei fünfte Durchführungen 36 in dem ersten Halteelement 4 geführt. Das Gewinde der Zylinderschrauben greift jeweils in ein Innengewinde einer Bohrung des Klemmrings 22. Ein Anziehen dieser Gewindeverbindung führt dazu, dass der Vorsprung 22b des Klemmrings 22 gegen den Stellring 17 und Klemmring 22 sowie Stellring 17 gegen das erste Haltelement 4 gepresst werden. Der Stellring 17 wird somit in dieser Position gehalten. Eine Drehung des Stellrings 17 ist somit nicht mehr möglich ist. Der Stellring ist somit arretiert.

Die Halteelemente 4, 5 umfassen ringförmig ausgebildete Kontaktabschnitte 12, 13. Der erste Kontaktabschnitt 12 des ersten Halteelements 4 kontaktiert den zweiten Kontaktabschnitt 13 des zweiten Halteelements 5. In dem vorliegenden Beispiel sind Kontaktabschnitte mit Rillen ausgestattet, welche ineinandergreifen. Dadurch wird ein Verrutschen der beiden Halteelemente 4, 5 gegeneinander vermieden. Die ringförmigen Kontaktabschnitte 12, 13 umschließen äußere Oberfläche 4a, 5a der Halteelemente 4, 5. Weiterhin ragen die Kontaktabschnitte 12, 13 von einer jeweiligen äußeren Oberfläche 4a, 5a der Halteelemente 4, 5 entlang Höhenachse Z nach oben beziehungsweise nach unten. Der erste Kontaktabschnitt 12 ragt von der äußeren Oberfläche 4a des ersten Halteelements 4 aus entlang der Höhenachse Z nach oben. Der zweite Kontaktabschnitt 13 ragt von der äußeren Oberfläche 5a des zweiten Halteelements 5 aus entlang der Höhenachse Z nach unten.

Die Kontaktabschnitte 12, 13 umschließen weiterhin radial den Klemmring 22. Eine radial äußere Randfläche des Klemmrings 22 liegt an oder nah neben einer an einer inneren Randfläche des ersten Kontaktabschnitts 12. Die Gesamthöhe des Klemmrings 22 beziehungsweise des Stellrings 17 ist jedoch etwas geringer als ein Abstand zwischen den äußeren Oberflächen 4a, 5a der Halteelemente 4, 5. Der Abstand ist durch Höhe der Kontaktabschnitte 12, 13 gegeben. Somit wird sichergestellt, dass die Drehung der Halteelemente 4, 5 uf den Kontaktabschnitten 12, 13 gelagert ist.

Die Rasteinrichtung 6 umfasst weiterhin ein Rastelement 20, welches mit einer Vorspannkraft derart beaufschlagt ist, dass dieses gegen den Stellring 17 gedrückt ist. Bei der Einrastposition 7 befindet sich das Rastelement 20 in der Ausnehmung 19 befindet, wenn der vorbestimmten Öffnungswinkel α zwischen den beiden Profilelementen 2, 3 erreicht ist. Die Vorspannkraft wird durch ein Federelement 21 und/oder ein elastisches Element bereitgestellt.

Das Rastelement 20 ist in dem zweiten Halteelement 5 angeordnet. Dabei ist das Rastelement 20 in einer Ausnehmung 24 oder einer Durchführung des unteren Hauptabschnitts 11a des zweiten Halteelements 5 angeordnet.

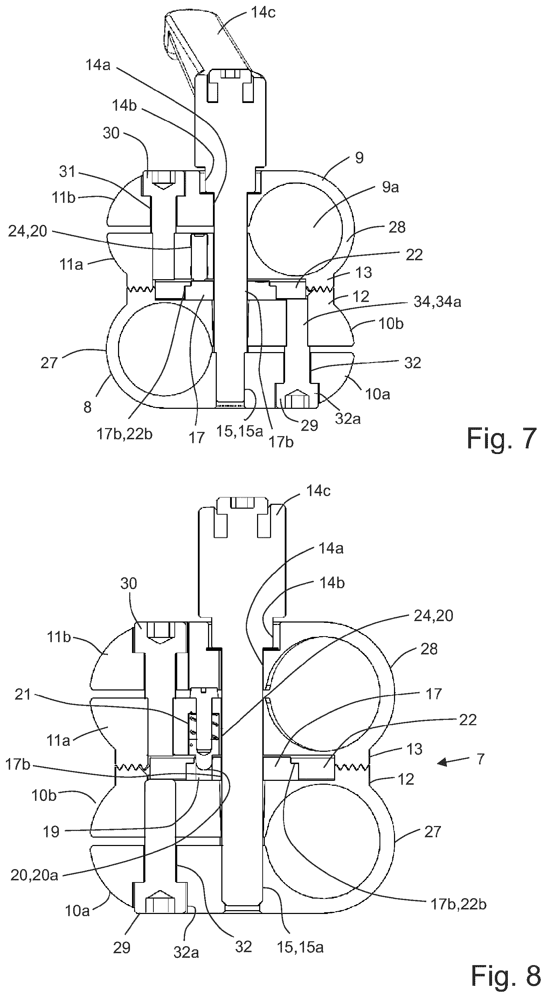

Bei einer Drehung der Halteelemente 4, 5 relativ zueinander drückt das Rastelement 20 auf den Stellring 17 (die Oberfläche 17a oder die Führungsnut 18). Wird die Ausnehmung 19 erreicht rastet das Rastelement 20 in diese Ausnehmung 19 ein, wodurch ein haptisches und/oder akustisches Signal erzeugt wird. Befindet sich das Rastelement in der Ausnehmung 19 muss bei einer weiteren Drehung der Halteelemente 4, 5 relativ zueinander Vorspannkraft überwunden werden. Hierdurch wird Rastelement 20 wieder aus der Ausnehmung 19 geführt. In den Figur 6 und Figur 7 ist das Rastelement 20 in der eine Rastposition 7 beziehungsweise befindet sich in der Ausnehmung 19 in Figur 7 ist ein komprimiertes Rastelement 20 gezeigt, welches auf der Oberfläche 17a des Stellrings 17 anliegt.

Das Rastelement 20 ist außermittig, d. h. mit einem Abstand zum Mittelachse 35 an dem zweiten Halteelement 5 angeordnet. Der radiale Abstand des Rastelements 20 zur Mittelachse 35 entspricht dem radialen Abstand der Führungsnut 18 beziehungsweise dem radialen Abstand der Ausnehmung 19. Bei einer Drehung bewegt sich somit das Rastelement 20 auf einer Kreisbahn beziehungsweise auf dem Stellring 17.

Im Vergleich zur Figur 6 und 7 ist in Figur 8 eine etwas andere Ausgestaltung des Rastelements 20 dargestellt. In den Figuren 6 und 7 ist ein Rastelement 20 dargestellt, welches als ein kompaktes Bauteil einteiliges Bauteil ausgebildet ist. Dieses Bauteil umfasst ein Federelement 21 beziehungsweise ein elastisches Element und ein Vorsprungselement 20a, welches gegen den Stellring 17 gepresst oder in die Ausnehmung 18 gepresst wird.

In Figur 8 ist das Rastelement 20 nicht durch ein einzelnes Bauteil ausgebildet, sondern durch mehrere Bauteile. Es ist ein Federelement 21 in einer Ausnehmung 24 angeordnet, welches ein Vorsprungselement 20a gegen den Stellring 17 oder in die Ausnehmung 18 drückt.

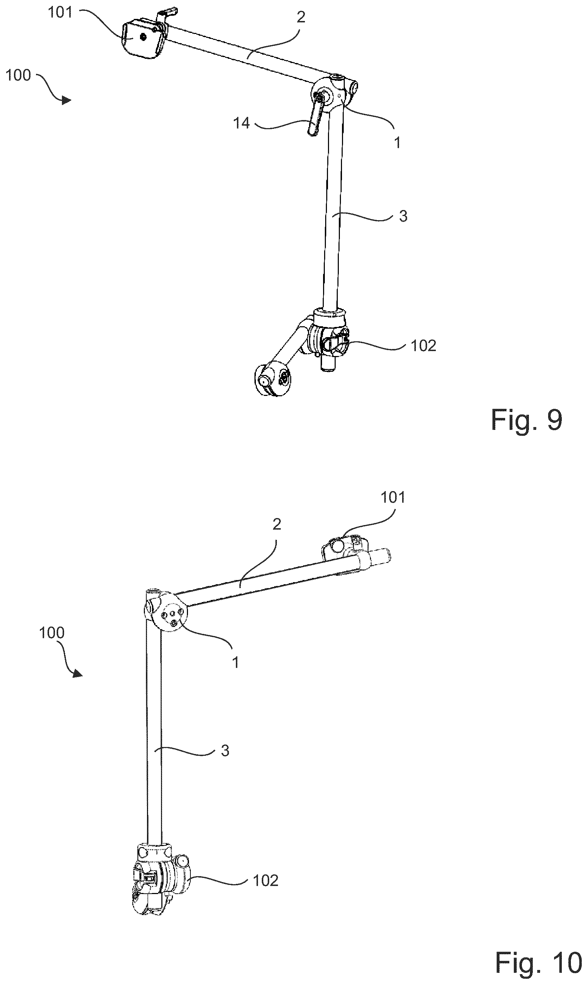

In den Figur 9 und 10 ist eine Halteeinrichtung 100 zur Halterung eines Objekts umfassend zumindest eine Gelenkvorrichtung 1 dargestellt. Die Halteeinrichtung 100 ist dazu bestimmt und eingerichtet ist an einer Pflegeeinrichtung angeordnet zu werden.

Die Halteeinrichtung umfasst Profielemente 2, 3 und eine Gelenkvorrichtung 1. An einem Profielemente 2 ist eins Objekthalterung 101 angeordnet, welche mittels einer Klemmvorrichtung an dem Profilelement 2 befestigt ist. Die Objekthalterung 101 kann entlang des Profilelement 2 verlagert werden und an verschiedenen Positionen befestigt werden. Die Objekthalterung 101 kann ein Objekt, beispielsweise eine Kommunikationseinrichtung, eine Bedieneinrichtung, eine Anzeigeeinrichtung oder Ähnliches aufnehmen.

An einem weiteren Profielement 3 ist eine Befestigungseinrichtung 102 angeordnet, mittels welcher die Halteeinrichtung 100 an einer Pflegeeinrichtung angeordnet und befestigt werden kann.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer, in einzelnen oder in unterschiedlichen Figuren gezeigter Merkmale ergeben können.

### Bezugszeichenliste

- 1: Gelenkvorrichtung
- 2: erstes Profilelement
- 3: zweites Profilelement
- 4: erstes Halteelement
- 4a: äußere Oberfläche
- 5: zweites Halteelement
- 5a: äußere Oberfläche
- 6: Rasteinrichtung
- 7: Einrastposition
- 8: Aufnahmeabschnitt des ersten Halteelements
- 8a: Aufnahmebereich
- 9: Aufnahmeabschnitt des zweiten Halteelements
- 9a: Aufnahmebereich
- 10a: unterer Hauptabschnitt des ersten Halteelements
- 10b: oberer Hauptabschnitt des ersten Halteelements
- 11a: unterer Hauptabschnitt des zweiten Halteelements
- 11b: oberer Hauptabschnitt des zweiten Halteelements
- 12: Kontaktabschnitt des ersten Halteelements
- 13: Kontaktabschnitt des zweiten Halteelements
- 14: Arretierungsmittel
- 14a: stiftartiger Abschnitt
- 14b: oberer Bereich
- 14c: Hebelelement
- 15: dritte Durchführung
- 15a: unterer Bereich der dritten Durchführung
- 16: vierte Durchführung
- 16a: Senkabschnitt
- 17: Stellring
- 17a: Oberfläche des Stellrings
- 17b: Öffnung
- 17c: umlaufende Stufe
- 18: Führungsnut
- 19: Ausnehmung
- 20: Rastelement
- 20a: Vorsprungselement
- 21: Federelement
- 22: Klemmring
- 22a: Öffnung
- 22b: umlaufender Vorsprung
- 22c: obere Oberfläche
- 23: Befestigungsmittel
- 24: Ausnehmung
- 25: Spalt
- 26: Spalt
- 27: bogenartiger Abschnitt
- 28: bogenartiger Abschnitt
- 29: Befestigungsmittel
- 30: Befestigungsmittel
- 31: erste Durchführung des oberen Hauptabschnitts
- 31a: Senkabschnitt der Durchführung
- 32: erste Durchführung des oberen Hauptabschnitts
- 32a: Senkabschnitt der Durchführung
- 33: zweite Durchführung des unteren Hauptabschnitts
- 33a: Innenggewinde
- 34: zweite Durchführung des unteren Hauptabschnitts
- 34a: Innenggewinde
- 35: Mittelachse
- 36: fünfte Durchführungen
- 100: Halteeinrichtung
- 101: Objekthalterung
- α: Öffnungswinkel
- Z: Höhenachse
- X: Längsachse
- Y: Breitenachse

## Patentansprüche

1. Gelenkvorrichtung (1) zur Halterung zweier Profilelemente (2, 3), umfassend zwei Halteelemente (4, 5) für jeweils ein Profilelement (2, 3), wobei mittels der Gelenkvorrichtung (1) ein Öffnungswinkel (α) zwischen den beiden Profilelementen (2, 3) einstellbar und arretierbar ist,
**dadurch gekennzeichnet, dass**
die Gelenkvorrichtung (1) eine Rasteinrichtung (6) umfasst, welche eine Einrastposition (7) aufweist, wobei in der Einrastposition (7) eine lösbare Einrastung erfolgt, bei welcher ein wahrnehmbares Signal erzeugt wird, wobei die Einrastposition (7) modifizierbar ist und mit einem vorbestimmten Öffnungswinkel (α) zwischen den beiden Profilelementen (2, 3) korreliert.

2. Gelenkvorrichtung (1) nach Anspruch 1,
**dadurch gekennzeichnet, dass**
die Halteelemente (4, 5) einen Aufnahmeabschnitt (8, 9) umfassen, in welchem ein Profilelement (2, 3) angeordnet ist, wobei der Aufnahmeabschnitt (8, 9) an zwei einander gegenüberliegenden Hauptabschnitten (10a, 10b, 11a, 11b) angeordnet ist, wobei die Hauptabschnitte (10a, 10b, 11a, 11b) in einem Grundzustand entlang einer Höhenachse (Z) beabstandet sind, wobei in einem Arretierungszustand die gegenüberliegenden Hauptabschnitte (10a, 10b, 11a, 11b) zumindest teilweise zusammengeführt sind, wodurch das Profilelement (2, 3) in dem Aufnahmeabschnitt (8, 9) arretiert ist.

3. Gelenkvorrichtung (1) nach Anspruch 1 oder 2,
**dadurch gekennzeichnet, dass**
die Halteelemente (4, 5) entlang der Höhenachse (Z) übereinander angeordnet sind, wobei die Halteelemente (4, 5) relativ zueinander drehbar sind, wobei durch diese Drehung der Halteelemente (4, 5) der Öffnungswinkel (α) einstellbar ist.

4. Gelenkvorrichtung (1) nach einem der Ansprüche 1 bis 3,
**dadurch gekennzeichnet, dass**
die Halteelemente (4, 5) Kontaktabschnitte (12, 13) umfassen, wobei die Kontaktabschnitte (12, 13) ringförmig ausgebildet sind, wobei ein erster Kontaktabschnitt (12) des ersten Halteelements (4) an einem zweiten Kontaktabschnitt (13) des zweiten Halteelements (5) anliegt.

5. Gelenkvorrichtung (1) nach einem der vorhergehenden Ansprüche,
**dadurch gekennzeichnet, dass**
die Gelenkvorrichtung (1) ein Arretierungsmittel (14) umfasst, mittels welchem eine Drehposition der Halteelemente (4, 5) relativ zueinander und somit der Öffnungswinkel (α) zwischen den beiden Profilelementen (2, 3) arretierbar ist, wobei das Arretierungsmittel (14) als Klemmhebelelement ausgebildet ist, wobei die Halteelemente (4, 5) aneinander anliegende Durchführungen (15, 16) aufweisen, in welchen das Arretierungsmittel (14) zumindest abschnittsweise angeordnet ist.

6. Gelenkvorrichtung (1) nach einem der vorhergehenden Ansprüche,
**dadurch gekennzeichnet, dass**
die Rasteinrichtung (6) einen Stellring (17) umfasst, wobei der Stellring (17) eine Führungsnut (18) und eine Ausnehmung (19) aufweist, wobei die Führungsnut (18) kreisbogenartig auf einer Oberfläche (17a) des Stellrings (17) angeordnet ist, wobei die Ausnehmung (19) entlang der Länge des Kreisbogens mittig in dem Kreisbogen angeordnet ist, wobei eine Tiefe der Ausnehmung (19) größer ist als eine Tiefe der Führungsnut (18).

7. Gelenkvorrichtung (1) nach einem der vorhergehenden Ansprüche,
**dadurch gekennzeichnet, dass**
die Rasteinrichtung (6) ein Rastelement (20) umfasst, welches mit einer Vorspannkraft derart beaufschlagt ist, dass dieses gegen den Stellring (17) gedrückt ist, wobei das Rastelement (20) sich in der Ausnehmung (19) befindet, wenn der vorbestimmten Öffnungswinkel (α) zwischen den beiden Profilelementen (2, 3) erreicht ist.

8. Gelenkvorrichtung (1) nach einem der vorhergehenden Ansprüche
**dadurch gekennzeichnet, dass**
ein Federelement (21) und/oder ein elastisches Element vorgesehen ist, welches die Vorspannkraft bereitstellt.

9. Gelenkvorrichtung (1) nach einem der vorhergehenden Ansprüche,
**dadurch gekennzeichnet, dass**
die Gelenkvorrichtung (1) einen Klemmring (22) umfasst, mittels welchem der Stellring (17) bezüglich einer Rotation relativ zu den Halteelementen (4, 5) arretierbar ist.

10. Gelenkvorrichtung (1) nach einem der vorhergehenden Ansprüche,
**dadurch gekennzeichnet, dass**
der Stellring (17) an einem ersten Halteelement (4, 5) angeordnet ist, wobei der Klemmring (22) den Stellring (17) radial umschließt, wobei zumindest ein Befestigungsmittel (23) vorgesehen ist, um den Klemmring (22) an dem ersten Halteelement (4) zu befestigen, wobei der Kontaktabschnitt (12) des ersten Halteelements (4) den Klemmring (22) radial umschließt.

11. Gelenkvorrichtung (1) nach einem der vorhergehenden Ansprüche,
**dadurch gekennzeichnet, dass**
das Rastelement (20) an einem zweiten Halteelement (5) angeordnet ist, wobei das Rastelement (20) in einer Ausnehmung (24) oder Durchführung eines Hauptabschnitts (11a) des zweiten Halteelements (5) angeordnet ist.

12. Halteeinrichtung (100) zur Halterung eines Objekts umfassend zumindest eine Gelenkvorrichtung (1) nach einem der vorhergehenden Ansprüche, wobei die Halteeinrichtung (100) dazu bestimmt und eingerichtet ist an einer Pflegeeinrichtung angeordnet zu werden.

## Geänderte Patentansprüche

### Geänderte Patentansprüche gemäss Regel 137(2) EPÜ.

1. Gelenkvorrichtung (1) zur Halterung zweier Profilelemente (2, 3), umfassend zwei Halteelemente (4, 5) für jeweils ein Profilelement (2, 3), wobei mittels der Gelenkvorrichtung (1) ein Öffnungswinkel (α) zwischen den beiden Profilelementen (2, 3) einstellbar und arretierbar ist,
**dadurch gekennzeichnet, dass**
die Gelenkvorrichtung (1) eine Rasteinrichtung (6) umfasst, welche eine Einrastposition (7) aufweist, wobei in der Einrastposition (7) eine lösbare Einrastung erfolgt, bei welcher ein wahrnehmbares Signal erzeugt wird, wobei die Einrastposition (7) modifizierbar ist und mit einem vorbestimmten Öffnungswinkel (α) zwischen den beiden Profilelementen (2, 3) korreliert, wobei die Rasteinrichtung (6) einen Stellring (17) umfasst, welcher eine Führungsnut (18) und eine Ausnehmung (19) aufweist, wobei durch eine Drehung des Stellrings (17) die Einrastposition (7) modifizierbar ist.

2. Gelenkvorrichtung (1) nach Anspruch 1,
**dadurch gekennzeichnet, dass**
die Halteelemente (4, 5) einen Aufnahmeabschnitt (8, 9) umfassen, in welchem ein Profilelement (2, 3) angeordnet ist, wobei der Aufnahmeabschnitt (8, 9) an zwei einander gegenüberliegenden Hauptabschnitten (10a, 10b, 11a, 11b) angeordnet ist, wobei die Hauptabschnitte (10a, 10b, 11a, 11b) in einem Grundzustand entlang einer Höhenachse (Z) beabstandet sind, wobei in einem Arretierungszustand die gegenüberliegenden Hauptabschnitte (10a, 10b, 11a, 11b) zumindest teilweise zusammengeführt sind, wodurch das Profilelement (2, 3) in dem Aufnahmeabschnitt (8, 9) arretiert ist.

3. Gelenkvorrichtung (1) nach Anspruch 1 oder 2,
**dadurch gekennzeichnet, dass**
die Halteelemente (4, 5) entlang der Höhenachse (Z) übereinander angeordnet sind, wobei die Halteelemente (4, 5) relativ zueinander drehbar sind, wobei durch diese Drehung der Halteelemente (4, 5) der Öffnungswinkel (α) einstellbar ist.

4. Gelenkvorrichtung (1) nach einem der Ansprüche 1 bis 3,
**dadurch gekennzeichnet, dass**
die Halteelemente (4, 5) Kontaktabschnitte (12, 13) umfassen, wobei die Kontaktabschnitte (12, 13) ringförmig ausgebildet sind, wobei ein erster Kontaktabschnitt (12) des ersten Halteelements (4) an einem zweiten Kontaktabschnitt (13) des zweiten Halteelements (5) anliegt.

5. Gelenkvorrichtung (1) nach einem der vorhergehenden Ansprüche,
**dadurch gekennzeichnet, dass**
die Gelenkvorrichtung (1) ein Arretierungsmittel (14) umfasst, mittels welchem eine Drehposition der Halteelemente (4, 5) relativ zueinander und somit der Öffnungswinkel (α) zwischen den beiden Profilelementen (2, 3) arretierbar ist, wobei das Arretierungsmittel (14) als Klemmhebelelement ausgebildet ist, wobei die Halteelemente (4, 5) aneinander anliegende Durchführungen (15, 16) aufweisen, in welchen das Arretierungsmittel (14) zumindest abschnittsweise angeordnet ist.

6. Gelenkvorrichtung (1) nach einem der vorhergehenden Ansprüche,
**dadurch gekennzeichnet, dass**
die Führungsnut (18) kreisbogenartig auf einer Oberfläche (17a) des Stellrings (17) angeordnet ist, wobei die Ausnehmung (19) entlang der Länge des Kreisbogens mittig in dem Kreisbogen angeordnet ist, wobei eine Tiefe der Ausnehmung (19) größer ist als eine Tiefe der Führungsnut (18).

7. Gelenkvorrichtung (1) nach einem der vorhergehenden Ansprüche,
**dadurch gekennzeichnet, dass**
die Rasteinrichtung (6) ein Rastelement (20) umfasst, welches mit einer Vorspannkraft derart beaufschlagt ist, dass dieses gegen den Stellring (17) gedrückt ist, wobei das Rastelement (20) sich in der Ausnehmung (19) befindet, wenn der vorbestimmten Öffnungswinkel (α) zwischen den beiden Profilelementen (2, 3) erreicht ist.

8. Gelenkvorrichtung (1) nach einem der vorhergehenden Ansprüche
**dadurch gekennzeichnet, dass**
ein Federelement (21) und/oder ein elastisches Element vorgesehen ist, welches die Vorspannkraft bereitstellt.

9. Gelenkvorrichtung (1) nach einem der vorhergehenden Ansprüche,
**dadurch gekennzeichnet, dass**
die Gelenkvorrichtung (1) einen Klemmring (22) umfasst, mittels welchem der Stellring (17) bezüglich einer Rotation relativ zu den Halteelementen (4, 5) arretierbar ist.

10. Gelenkvorrichtung (1) nach Anspruch 9,
**dadurch gekennzeichnet, dass**
der Stellring (17) an einem ersten Halteelement (4, 5) angeordnet ist, wobei der Klemmring (22) den Stellring (17) radial umschließt, wobei zumindest ein Befestigungsmittel (23) vorgesehen ist, um den Klemmring (22) an dem ersten Halteelement (4) zu befestigen, wobei der Kontaktabschnitt (12) des ersten Halteelements (4) den Klemmring (22) radial umschließt.

11. Gelenkvorrichtung (1) nach einem der vorhergehenden Ansprüche,
**dadurch gekennzeichnet, dass**
das Rastelement (20) an einem zweiten Halteelement (5) angeordnet ist, wobei das Rastelement (20) in einer Ausnehmung (24) oder Durchführung eines Hauptabschnitts (11a) des zweiten Halteelements (5) angeordnet ist.

12. Halteeinrichtung (100) zur Halterung eines Objekts umfassend zumindest eine Gelenkvorrichtung (1) nach einem der vorhergehenden Ansprüche, wobei die Halteeinrichtung (100) dazu bestimmt und eingerichtet ist an einer Pflegeeinrichtung angeordnet zu werden.
